# EUROPEAN PATENT SPECIFICATION

(11) **EP 2 019 764 B1**
(45) Date of publication and mention of the grant of the patent: **19.09.2012**
(21) Application number: 07734548.6
(22) Date of filing: 11.05.2007
(51) Int. Cl.: B60R 21/34

(54) **A HINGE FOR A FRONT BONNET OF A MOTOR VEHICLE**
SCHARNIER FÜR EINE FRONTHAUBE EINES KRAFTFAHRZEUGS
CHARNIERE POUR LE CAPOT D'UN VEHICULE A MOTEUR

(30) Priority: 11.05.2006 IT BO20060356
(43) Date of publication of application: 04.02.2009
(73) Proprietor: FERRARI S.p.A., 41100 Modena (IT)
(72) Inventor: NARDUCCI, Angelo, 47015 Modigliana (IT); PAVARELLI, Ivan, 41053 Maranello (IT); DEL MONTE, Mauro, 41100 Modena (IT)
(74) Representative: Maccagnan, Matteo
(86) International application number: PCT/IB2007/001239
(87) International publication number: WO 2007/132333

(56) References cited:
- DE-U1- 20 314 057
- JP-A- 2003 182 511
- US-A1- 2005 279 550

## Description

### TECHNICAL FIELD

The present invention relates to a hinge for a front bonnet of a motor vehicle.

### PRIOR ART

Normally, in a motor vehicle, the front bonnet is mounted onto a frame of the motor vehicle itself by means of a pair of hinges arranged laterally on opposite sides of the front bonnet.

Recent international standards have also taken care of protecting the safety of a pedestrian as far as possible in case of frontal collisions against a motor vehicle.

During a frontal collision against a pedestrian, it has been observed that the pedestrian's head tends to violently bang against the front bonnet of the motor vehicle; for such reason, the recent international standards contemplate a limit to the stresses to which the pedestrian's head banging violently against the front bonnet of a motor vehicle is subjected. In order to simulate such situation, recent international standards contemplate hurling a spherical shape test impactor onto the front bonnet of a motor vehicle and measuring the accelerations to which the test impactor is subjected during the collision. Specifically, recent international standards define a synthetic biomedical parameter named "HIC", which must not exceed a certain threshold value (currently equal to 2000).

A traditional hinge for a front bonnet of a motor vehicle comprises a fixed bracket, which is rigidly connected to a frame of the motor vehicle, and a mobile bracket, which is hinged to the fixed bracket and is rigidly connected to the front bonnet; specifically, the fixed bracket comprises at least two circular shaped through holes, through which screws which are screwed into corresponding threaded holes obtained through the frame are arranged.

It has been observed that by using the traditional hinges of the above-described type, it is very difficult for the front bonnet to present a sufficient pliability at the hinges to limit the accelerations to which the test impactor is subjected during the collision within the limits established by the recent international standards. In other words, the hinges locally stiffen the front bonnet and consequently the front bonnet at the hinges does not present a sufficient pliability to limit the accelerations to which the test impactor is subjected during the collision within the limits established by the recent international standards.

Consequently, various constructive solutions have been suggested to make new types of hinges adapted to give to the front bonnet a sufficient pliability at the hinges to respect the limits established by the recent international standards. Some examples of the new types of hinges are provided in patents US2003010552A1, US6415882B1, US2002046444A1, US2005279550A1.

Patent application DE20314057U1 is considered the closest prior art and discloses a hinge for a front bonnet of a motor vehicle according to the precharacterizing portion of independent claim 1.

### DESCRIPTION OF THE INVENTION

It is the object of the present invention to provide a hinge for a front bonnet of a motor vehicle, which hinge is free from the above-described drawbacks and is concurrently easy and cost-effective to manufacture.

According to the present invention, a hinge for a front bonnet of a motor vehicle as claimed in the appended claims is provided.

### BRIEF DESCRIPTION OF THE DRAWINGS

The present invention will now be described with reference to the accompanying drawings which illustrate some non-limitative embodiments thereof, in which:
- figure 1 diagrammatically shows, in side section and with parts removed for clarity, a front bonnet of a motor vehicle mounted by means of a pair of hinges made according to the present invention;
- figure 2 shows on a magnified scale a fixed bracket of the hinge in figure 1; and
- figure 3 shows a variant of the fixed bracket in figure 1.

### PREFERRED EMBODIMENTS OF THE INVENTION

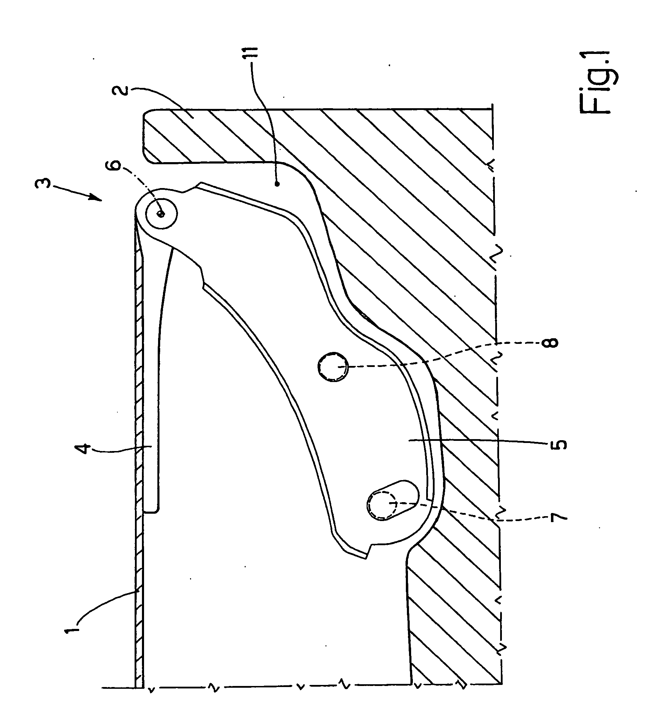

In figure 1, numeral 1 indicates a front bonnet of a motor vehicle. Front bonnet 1 is mounted onto a frame 2 of the motor vehicle by means of a pair of hinges 3 (only one of which is shown in figure 1) laterally arranged on opposite sides of front bonnet 1.

Each hinge 3 comprises a mobile bracket 4, which is rigidly connected to front bonnet 1, and a fixed bracket 5, which presents an elongated shape and is hinged to fixed hinge 5 to rotate about a rotation axis 6. Fixed bracket 5 is rigidly connected to frame 2 of the motor vehicle by means of two fastening screws 7 and 8 which are arranged through two through holes 9 and 10 obtained through fixed bracket 5 itself; two fastening screws 7 and 8 are fastened into corresponding blank, threaded holes obtained through frame 2 and are preferably provided with corresponding washers (not shown).

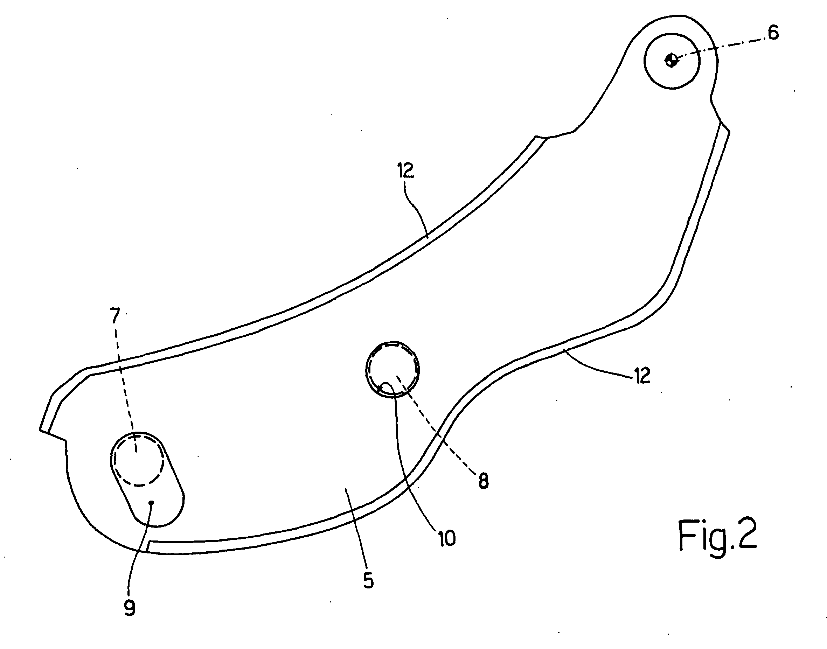

As shown in figure 2, rotation axis 6 is arranged at a first end of fixed bracket 5, through hole 9 is arranged at a second end of fixed bracket 5 opposite to the first end, and through hole 10 is arranged in an intermediate position between the two ends of fixed bracket 5.

Through hole 9 is engaged in fastening hole 7 and presents an elongated shape, which has a transversal dimension slightly larger than the diameter of fastening screw 7 and a longitudinal dimension considerably larger than the diameter of fastening screw 7 (indicatively, 2-3 times larger). Through hole 10 is engaged by fastening screw 8 and presents a circular shape having a diameter slightly larger than the diameter of fastening screw 8.

Fastening screws 7 and 8 are tightened to frame 2 of the motor vehicle with corresponding calibrated and limited tightening torques so as to allow a rotation of fixed bracket 5 about fastening screw 8 in case of a collision against front bonnet 1 at hinge 3 and to consequently determine a lowering of the position of rotation axis 6. Specifically, in case of collision against front bonnet 1, the friction force exerted by fastening screws 7 and 8 is not capable of contrasting the rotation of fixed bracket 5 about fastening screw 8 and consequently a lowering of the position of rotation axis 6 is determined. Therefore, in case of collision, front bonnet 1 presents a certain degree of pliability thanks to the lowering of the position of rotation axis 6; such degree of pliability allows to considerably reduce the accelerations to which a body which impacts against front bonnet 1 at hinge 3 is subjected.

It is important to observe that at fixed bracket 5, frame 2 of motor vehicle must present a free area 11 (shown in figure 1) to allow fixed bracket 5 itself to rotate about fastening screw 8 in case of a collision against front bonnet 1.

According to a preferred embodiment, fixed bracket 5 comprises two reinforcement ribs 12, which are arranged at opposite side edges of fixed bracket 5 itself.

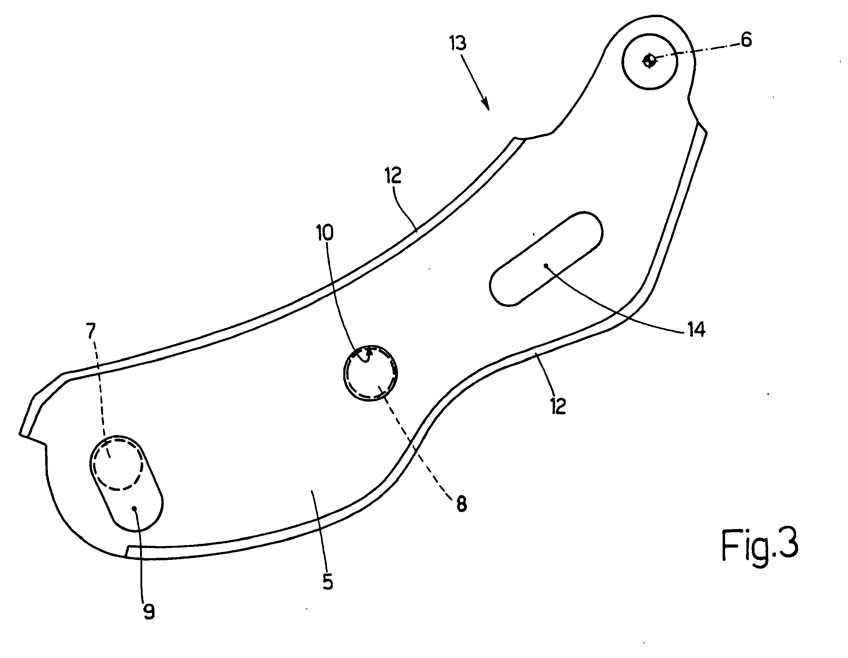

According to different embodiment shown in figure 3, fixed bracket 5 comprises a weakened area 13, which is arranged between through hole 10 and rotation axis 6 and is adapted to collapse to consequently determine a further lowering of the position of rotation axis 6. Preferably, weakened area 13 comprises a weakening through hole 14, which is obtained through fixed bracket 5 and presents an elongated shape arranged parallelly to fixed bracket 5; i.e. the largest dimension of weakening through hole 14 is parallel to the largest dimension of fixed bracket 5.

In order to ensure the necessary mechanical strength to fixed bracket 5, the transversal dimension of weakening through hole 14 is smaller than the transversal dimension of the portions of fixed bracket 5 arranged about weakening through hole 14 and on opposite sides of weakening through hole 14 itself.

Theoretical and experimental tests have demonstrated that performing the test established by the recent international standards which contemplates hurling a spherical shape test impactor against front bonnet 1, the synthetic biomedical parameter named "HIC" was lower than the maximum limit of 2000 allowed by the international standards. Furthermore, in the case of the further embodiment shown in figure 3 and provided with weakening through hole 14, theoretical simulations have predicted that the synthetic biomedical parameter named "HIC" may be lower than that obtained by the embodiment shown in figure 2.

It is thus apparent that above-described hinge 3 is perfectly capable of responding to the requirements of the recent international standards in relation to the safety of a pedestrian in the case of frontal collision. Furthermore, the above-described hinge 3 is simple and cost-effective to manufacture and concurrently presents a high reliability in time.

## Claims

1. A hinge (3) for a front bonnet (1) of a motor vehicle; the hinge (3) connected to a frame of the motor vehicle comprises:
a mobile bracket (4), which is rigidly connected to the front bonnet (1); and
a fixed bracket (5), which presents an elongated shape, is hinged to the mobile bracket (4) at a rotation axis (6) of the hinge (3), and is rigidly connected to the frame (2) of the motor vehicle by means of two fastening screws (7, 8) which are arranged through two through holes (9, 10) obtained through the fixed bracket (5); the rotation axis (6) is arranged at a first end of fixed bracket (5), a first through hole (9) is arranged at a second end of the fixed bracket (5) opposite to the first end, and a second through hole (10) is arranged in an intermediate position between the two ends of the fixed bracket (5);
the hinge (3) connected to a frame of the motor vehicle is **characterised in that**:
the first through hole (9) presents an elongated shape and is engaged by a first fastening screw (7);
the second through hole (10) presents a circular shape and is engaged by a second fastening screw (8);
the first fastening screw (7) is tightened to the frame (2) of the motor vehicle with a calibrated and limited tightening torque so as to allow a rotation of the fixed bracket (5) about the second fastening screw (8) in case of a collision against the front bonnet (1) at the hinge (3) and to consequently determine a lowering of the position of the rotation axis (6); and
at the fixed bracket (5), the frame (2) of the motor vehicle presents a free area (11) to allow the fixed bracket (5) to rotate about the second fastening screw (8) in case of a collision the front bonnet (1).

2. A hinge (3) connected to a frame of the motor vehicle according to claim 1, wherein the second fastening screw (8) is also tightened to the frame (2) of the motor vehicle with a calibrated and limited tightening torque so as to allow a rotation of the fixed bracket (5) about the second fastening screw (8) in case of a collision against the front bonnet (1) at the hinge (3) and to consequently determine a lowering of the position of the rotation axis (6).

3. A hinge connected to a frame of the motor vehicle according to claim 1 or 2, wherein the fixed bracket (3) comprises two reinforcement ribs (12), which are arranged at opposite side edges of the fixed bracket (5).

4. A hinge (3) connected to a frame of the motor vehicle according to claim 1, 2, or 3 wherein the fixed bracket (5) comprises a weakened area (13), which is arranged between the second through hole (10) and the rotation axis (6) and is adapted to collapse to consequently determine a further lowering of the position of the rotation axis (6).

5. A hinge (3) connected to a frame of the motor vehicle according to claim 4, wherein the weakened area (13) comprises a third weakening through hole (14) obtained through the fixed bracket (5).

6. A hinge (3) connected to a frame of the motor vehicle according to claim 5, wherein the third weakening through hole (14) presents an elongated shape arranged parallelly to the fixed bracket (5).

7. A hinge (3) connected to a frame of the motor vehicle according to claim 6, wherein the transversal dimension of the third weakening hole (14) is smaller than the transversal dimension of the portions of the fixed bracket (5) arranged about the third through hole (14) and on opposite sides of the through hole (14).

## Patentansprüche

1. Scharnier (3) für eine Fronthaube (1) eines Kraftfahrzeugs;
wobei das mit einem Rahmen des Kraftfahrzeugs verbundene Scharnier (3) aufweist:
einen beweglichen Halter (4), der starr mit der Fronthaube (1) verbunden ist; und
einen festen Halter (5), der eine längliche Form aufweist, der mit dem beweglichen Halter (4) an einer Drehachse (6) des Scharniers (3) gelenkig verbunden ist und starr mit dem Rahmen (2) des Kraftfahrzeugs mittels zweier Befestigungsschrauben (7, 8) verbunden ist, die durch zwei Durchgangsbohrungen (9, 10) angeordnet sind, die durch den festen Halter (5) erhalten werden; wobei die Drehachse (6) an einem ersten Ende des festen Halters (5) angeordnet ist, eine erste Durchgangsbohrung (9) an einem zweiten Ende des festen Halters (5) gegenüber dem ersten Ende angeordnet ist, und eine zweite Durchgangsbohrung (10) an einer Zwischenposition zwischen den beiden Enden des festen Halters (5) angeordnet ist;
wobei das mit einem Rahmen des Kraftfahrzeugs verbundene Scharnier (3) **dadurch gekennzeichnet ist, dass**:
die erste Durchgangsbohrung (9) eine längliche Form aufweist und durch eine erste Befestigungsschraube (7) in Eingriff genommen wird;
die zweite Durchgangsbohrung (10) eine Kreisform aufweist und durch eine zweite Befestigungsschraube (8) in Eingriff genommen wird;
die erste Befestigungsschraube (7) am Rahmen (2) des Kraftfahrzeugs mit einem kalibrierten und begrenzten Anzugsdrehmoment angezogen wird, um im Fall eines Aufpralls auf die Fronthaube (1) am Scharnier (3) eine Rotation des festen Halters (5) um die zweite Befestigungsschraube (8) zu ermöglichen und um folglich eine Absenkung der Position der Drehachse (6) festzulegen; und
der Rahmen (2) des Kraftfahrzeugs am festen Halter (5) einen freien Bereich (11) aufweist, um es dem festen Halter (5) im Fall eines Aufpralls der Fronthaube (1) zu ermöglichen, sich um die zweite Befestigungsschraube (8) zu drehen.

2. Mit einem Rahmen des Kraftfahrzeugs verbundenes Scharnier (3) nach Anspruch 1, wobei die zweite Befestigungsschraube (8) auch am Rahmen (2) des Kraftfahrzeugs mit einem kalibrierten und begrenzten Anzugsdrehmoment angezogen wird, um im Fall eines Aufpralls auf die Fronthaube (1) am Scharnier (3) eine Rotation des festen Halters (5) um die zweite Befestigungsschraube (8) zu ermöglichen und um folglich eine Absenkung der Position der Drehachse (6) festzulegen.

3. Mit einem Rahmen des Kraftfahrzeugs verbundenes Scharnier nach Anspruch 1 oder 2, wobei der feste Halter (3) zwei Verstärkungsrippen (12) aufweist, die auf gegenüberliegenden Seitenkanten des festen Halters (5) angeordnet sind.

4. Mit einem Rahmen des Kraftfahrzeugs verbundenes Scharnier (3) nach Anspruch 1, 2 oder 3, wobei der feste Halter (5) einen geschwächten Bereich (13) aufweist, der zwischen der zweiten Durchgangsbohrung (10) und der Drehachse (6) angeordnet ist und eingerichtet ist, zusammenzubrechen, um folglich eine weitere Absenkung der Position der Drehachse (6) festzulegen.

5. Mit einem Rahmen des Kraftfahrzeugs verbundenes Scharnier (3) nach Anspruch 4, wobei der geschwächte Bereich (13) eine dritte schwächende Durchgangsbohrung (14) aufweist, die durch den festen Halter (5) erhalten ist.

6. Mit einem Rahmen des Kraftfahrzeugs verbundenes Scharnier (3) nach Anspruch 5, wobei die dritte schwächende Durchgangsbohrung (14) eine längliche Form aufweist, die parallel zum festen Halter (5) angeordnet ist.

7. Mit einem Rahmen des Kraftfahrzeugs verbundenes Scharnier (3) nach Anspruch 6, wobei die Querabmessung der dritten schwächende Bohrung (14) kleiner als die Querabmessung der Abschnitte des festen Halters (5) ist, die über der dritten Durchgangsbohrung (14) und auf gegenüberliegenden Seiten der Durchgangsbohrung (14) angeordnet sind.

## Revendications

1. Charnière (3) pour capot avant (1) de véhicule automobile, la charnière (3) reliée au châssis du véhicule automobile comprenant :
une patte mobile (4), qui est reliée rigidement au capot avant (1) ; et
une patte fixe (5), qui a une forme allongée, est articulée sur la patte mobile (4) au niveau d'un axe de rotation (6) de la charnière (3), et est reliée rigidement au châssis (2) du véhicule automobile au moyen de deux vis de fixation (7, 8) qui passent par deux trous traversants (9, 10) formés à travers la patte fixe (5) ; l'axe de rotation (6) est situé à une première extrémité de la patte fixe (5), un premier trou traversant (9) est formé à une seconde extrémité de la patte fixe (5) à l'opposé de la première extrémité, et un deuxième trou traversant (10) est formé en une position intermédiaire entre les deux extrémités de la patte fixe (5) ;
la charnière (3) reliée au châssis du véhicule automobile étant caractérisée en ce qui :
le premier trou traversant (9) a une forme allongée et est engagé par une première vis de fixation (7) ;
le deuxième trou traversant (10) a une forme circulaire et est engagé par une seconde vis de fixation (8) ;
la première vis de fixation (7) est serrée sur le châssis (2) du véhicule automobile avec un couple de serrage calibré et limité afin de suivre une rotation de la patte fixe (5) autour de la seconde vis de fixation (8) dans le cas d'une collision contre le capot avant (1) au niveau de la charnière (3) et, par conséquent, de déterminer un abaissement de la position de l'axe de rotation (6) ; et
au niveau de la patte fixe (5), le châssis (2) du véhicule automobile présente une zone libre (11) pour permettre à la patte fixe (5) de tourner autour de la seconde vis de fixation (8) dans le cas d'une collision du capot avant (1).

2. Charnière (3) reliée à un châssis de véhicule automobile selon la revendication 1, dans laquelle la seconde vis de fixation (8) est également serrée sur le châssis (2) du véhicule automobile avec un couple de serrage calibré et limité afin de suivre une rotation de la patte fixe (5) autour de la seconde vis de fixation (8) dans le cas d'une collision contre le capot avant (1) au niveau de la charnière (3) et, par conséquent, de déterminer, un abaissement de la position de l'axe de rotation (6).

3. Charnière (3) reliée à un châssis de véhicule automobile selon la revendication 1 ou 2, dans laquelle la patte fixe (5) comprend deux nervures de renforcement (12), qui sont situées aux bords latéraux opposés de la patte fixe (5).

4. Charnière (3) reliée à un châssis de véhicule automobile selon la revendication 1, 2 ou 3, dans laquelle la patte fixe (5) comprend une zone affaiblie (13), qui est située entre le deuxième trou traversant (10) et l'axe de rotation (6) et est apte à s'affaisser pour déterminer, par conséquent, un abaissement supplémentaire de la position de l'axe de rotation (6).

5. Charnière (3) reliée à un châssis de véhicule automobile selon la revendication 4, dans laquelle la zone affaiblie (13) comprend un troisième trou traversant (14) d'affaiblissement, formé à travers la patte fixe (5).

6. Charnière (3) reliée à un châssis de véhicule automobile selon la revendication 5, dans laquelle le troisième trou traversant (14) d'affaiblissement a une forme allongée agencée parallèlement à la patte fixe (5).

7. Charnière (3) reliée à un châssis de véhicule automobile selon la revendication 6, dans laquelle la dimension transversale du troisième trou traversant (14) d'affaiblissement est inférieure à la dimension transversale des parties de la patte fixe (5) agencées autour du troisième trou traversant (14) et sur les côtés opposés du trou traversant (14).
